# EUROPÄISCHE PATENTSCHRIFT

(11) **EP 2 039 508 B1**
(45) Veröffentlichungstag und Bekanntmachung des Hinweises auf die Patenterteilung: **19.05.2010**
(21) Anmeldenummer: 08014954.5
(22) Anmeldetag: 23.08.2008
(51) Int. Cl.: B32B 27/32, G09F 3/10, G09F 3/02

(54) **Etikettenfolie**
Label film
Film à étiquettes

(30) Priorität: 20.09.2007 DE 102007045117
(43) Veröffentlichungstag der Anmeldung: 25.03.2009
(73) Patentinhaber: Nordenia Deutschland Gronau GmbH, 48599 Gronau (DE)
(72) Erfinder: Niepelt, Ralf, 48599 Gronau (DE); Rudolph, Sven, 06258 Schkopau (DE)
(74) Vertreter: Albrecht, Rainer Harald

(56) Entgegenhaltungen:
- WO-A-2007/085283
- DE-A1- 19 962 114
- DE-C1- 19 859 789

## Beschreibung

Die Erfindung betrifft eine transparente Etikettenfolie.

Die Etikettenfolie ist bedruckbar und wird mittels eines Klebstoffes auf einem Träger, z. B. silikonisiertem Papier oder einer Kunststofffolie, aufgebracht. Das aus Etikettenfolie und Träger bestehende Laminat wird im Zuge der weiteren Verarbeitung gestanzt, wobei ein Verschnitt als Stanzgitter von dem Träger abgelöst wird. Hierbei ist wichtig, dass die Etikettenfolie gut stanzbar ist. Auf dem Träger verbleiben separate Etikettenabschnitte. Beim Spenden, also bei der Applikation des Etiketts auf einem zu applizierenden Gegenstand, wird der Träger mit einem kleinen Biegeradius in einem großen Winkel umgelenkt, wobei sich der Etikettenabschnitt von dem Träger löst. Die Biegesteifigkeit des Etikettenabschnitts muss hinreichend groß sein, damit der bereits von der Ablösefolie bzw. dem Träger losgelöste Teil des Etikettenabschnitts frei schwebend bis zum Anlegepunkt an dem zu etikettierenden Gegenstand geschoben werden kann, ohne sich aus der vorgesehenen Bahn heraus zu biegen. Neben einer ausreichenden Biegesteifigkeit wird aus Kostengründen eine möglichst geringe Foliendicke der Etikettenfolie angestrebt. Für viele Anwendungen werden ferner transparente Etikettenfolien mit geringer Trübung bevorzugt.

Aus EP 0 950 511 B1 ist eine mehrschichtige Etikettenfolie bekannt, deren Kernschicht aus Polypropylen (PP)-Homopolymeren oder einer Polypropylen-Mischung aus PP-Homopolymeren und PP-Copolymeren besteht. Als PP-Copolymere können Blockcopolymere und Randompolymere eingesetzt werden, wobei Randompolymere bevorzugt sind. Der Anteil der Homopolymere in der Propylen-Mischung variiert zwischen 5 und 95 %. Die äußeren Schichten bestehen aus einem Polyethylen (PE) oder PE-Mischungen aus Polyethylenen. Die Etikettenfolie kann als Blasfolie oder Gießfolie hergestellt werden und wird anschließend in Maschinenrichtung verstreckt. Sie ist in Maschinenrichtung orientiert und hitzestabilisiert. Ihre mechanischen Eigenschaften weisen in Maschinenrichtung und quer zur Maschinenrichtung signifikante Unterschiede auf. Die Etikettenfolie besitzt in Maschinenrichtung eine hohe Steifigkeit und hohe Reißfestigkeit. Die Reißdehnung ist in Maschinenrichtung niedrig und quer zur Maschinenrichtung groß.

Eine aus DE 198 59 789 C1 bekannte Etikettenfolie besteht aus einer dreischichtigen Coextrusionsfolie, die eine Kernschicht aus Polypropylen und Deckschichten aus Polyethylen aufweist. Die Etikettenfolie zeichnet sich durch eine hohe Biegesteifigkeit aus, die für den Spendevorgang als vorteilhaft angesehen wird. Eine Orientierung der Folie ist nicht mehr erforderlich. Die optischen Eigenschaften der Folie erfüllen allerdings noch nicht höchste Ansprüche. Die Etikettenfolie wird daher eingefärbt oder bei geringen Pigmentzusätzen als opake Folie verwendet.

Aus EP 1 543 955 A1 ist eine mehrschichtige Etikettenfolie auf Basis von Polyethylenen bekannt, die äußere Schichten aus HDPE sowie eine Kernschicht aus einem Polyethylen niedriger Dichte (LDPE oder LLDPE) aufweist. Die Foliendicke der Etikettenfolie ist kleiner als 85 µm und beträgt vorzugsweise etwa 70 µm.

Die bekannten Etikettenfolien sind hinsichtlich des Stanz- und Spendeprozesses optimiert und weisen eine hohe Biegesteifigkeit auf. Die für den Stanz- und Spendeprozess vorteilhafte hohe Biegesteifigkeit reduziert die Einsatzmöglichkeit der Etikettenfolie auf die Etikettierung von Produkten mit hauptsächlich flächiger Geometrie und höchstens großen Krümmungsradien. Werden die Etikettenfolien auf flexible Verpackungen oder stark gekrümmte Flächen aufgebracht, so verursacht die Biegesteifigkeit hohe Rückstellkräfte, die zum Ablösen des Etikettes führen können. Zur Kompensation der Rückstellkräfte müssen Spezialhaftklebstoffe eingesetzt werden, die das Ablösen des Etiketts vermeiden sollen. Es sind spezielle, teure Klebstoffe notwenig, die Umstellungen beim Laminatprozess erfordern und das Etikettenfolien-Laminat in der Herstellung verteuern. Auch hinsichtlich ihrer Eigenschaften beim Abgittern, d. h. beim Abziehen der rahmenförmigen Stanzabfälle nach dem Stanzvorgang, sind die bekannten Etikettenfolien noch verbesserungsbedürftig. Wenn die Reißdehnungswerte der Etikettenfolie in Maschinenrichtung und quer zur Maschinenrichtung sehr unterschiedlich sind oder das Niveau der Reißdehnung unzureichend ist, reißt das vom Träger nach dem Stanzvorgang abzuziehende Gitter leicht ein. Die Folge sind Störungen beim Abgitterprozess.

Der Erfindung liegt die Aufgabe zugrunde, eine transparente Etikettenfolie anzugeben, die sich durch eine sehr geringe Trübung auszeichnet, gut verarbeiten lässt und sich flexibel an Oberflächenkonturen des zu etikettierenden Gegenstandes anpasst.

Gegenstand der Erfindung und Lösung dieser Aufgabe ist die Verwendung einer ungereckten, transparenten Blasfolie, welche
- äußere Schichten aus Polyethylen und eine Kernschicht aus einer Polypropylen-Mischung bestehend aus 5 bis 25 Gew.-% PP-Homopolymeren, 5 bis 35 Gew.-% PP-Random-Copolymeren und 40 bis 80 Gew.-% PP-Blockcopolymeren aufweist,
- mit einer im Wesentlichen gleichen Verformungskraft in Maschinenrichtung und quer zur Maschinenrichtung biegsam ist und
- eine Trübung (Haze) von weniger als 10 % aufweist,
als stanz- und bedruckbare Etikettenfolie für flexible und/oder stark gekrümmte Oberflächen.
Die erfindungsgemäße Mischung verschiedener Polypropylentypen im Zusammenwirken mit einer dreilagigen Folienstruktur führt zu einer ausreichenden und isotropen Biegesteifigkeit der Etikettenfolie, die den Spendevorgang des Etiketts positiv unterstützt. Charakteristisch für die Erfindung ist der geringe Anteil an Polypropylen-Homopolymeren, welche die Biegesteifigkeit und Stanzbarkeit des Materials fördern, in Abmischung mit einem großen Anteil an PP-Blockcopolymeren, aus denen Blasfolien mit hohem E-Modul und geringer Trübung gefertigt werden können. Hinzu kommt eine Abmischung mit Polypropylen-Randomcopolymeren. Die Kristallinität der Polymermischung ist über das Mischungsverhältnis der genannten Komponenten steuerbar. Aus der erfindungsgemäßen Polymermischung ist eine Blasfolie herstellbar, die sich durch eine geringe Trübung und isotrope mechanische Eigenschaften auszeichnet. Die aus der Polymermischung hergestellte Blasfolie ist flexibel und passt sich an stark gekrümmte Oberflächen sowie auch flexible Oberflächen gut an. Aufgrund der großen Flexibilität der erfindungsgemäßen Etikettenfolie sind teuere Spezialklebstoffe nicht mehr notwendig, um ein Ablösen der Etiketten von gekrümmten oder flexiblen Gegenständen zu vermeiden. Die erfindungsgemäße Etikettenfolie eignet sich für flexible Verpackungen, beispielsweise Tuben, Folienverpackungen, PET-Flaschen und dergleichen. Des Weiteren ist die erfindungsgemäße Etikettenfolie auf stark gekrümmten Oberflächen, die einen Krümmungsradius von weniger als 10 mm aufweisen können, applizierbar. Die erfindungsgemäße Blasfolie wird keiner nachträglichen Reckung und/oder Wärmebehandlung unterworfen. Sie zeichnet sich durch gleichwertige Biegesteifigkeiten in Maschinenrichtung und quer zur Maschinenrichtung aus. Die Biegesteifigkeit der Folie in Maschinenrichtung (MD) und quer zur Maschinenrichtung (CD) weicht höchstens um 10 %, vorzugsweise um weniger als 5 %, von einem aus beiden Werten genommenen Mittelwert ab.

Die im Wege der Coextrusion hergestellte erfindungsgemäße Blasfolie ist dreischichtig ausgebildet. Zwischen den Schichten können gegebenenfalls Haftvermittlerschichten vorgesehen sein. Das Schichtdickenverhältnis A/B/C der Außenschichten A, C zur Kernschicht B liegt im Bereich 1 : 4 : 1 Bis 1 : 10 : 1, wobei ein Schichtdickenverhältnis von 1 : 8 : 1 bevorzugt ist. Die Gesamtdicke der Etikettenfolie beträgt weniger als 80 µm und liegt vorzugsweise im Bereich zwischen 50 und 70 µm.

Die erfindungsgemäße Etikettenfolie weist ferner eine ausgewogene Reißdehnung in Maschinenrichtung und quer zur Maschinenrichtung auf. Die Reißdehnung der Etikettenfolie beträgt erfindungsgemäß sowohl in Maschinenrichtung (MD) als auch quer zur Maschinenrichtung (CD) mindestens 600 %, gemessen an einer unbedruckten und unlackierten Folie. Vorzugsweise liegt die Reißdehnung sowohl in Maschinenrichtung (MD) als auch quer zur Maschinenrichtung (CD) im Bereich zwischen 700 % und 1000 %. Aufgrund des ausgewogenen Reißdehnungsverhaltens in Maschinenrichtung und in Querrichtung weist die Etikettenfolie gute Eigenschaften beim Abgittern auf. Die gitterförmigen Stanzabfälle lassen sich problemlos von dem Träger abziehen, ohne dass die Gefahr eines Einreißens besteht.

Die Außenschichten der Etikettenfolie bestehen aus einem Polyethylen oder einer Mischung aus Polyethylenen mit einer Dichte von weniger als 0,940 g/cm³. Vorzugsweise bestehen die Außenschichten aus einer Polyethylenmischung aus PE-LLD, PE-LMD und PE-MD, wobei der Anteil von Polyethylen mittlerer Dichte PE-MD zweckmäßig weniger als 30 Gew.-% beträgt. Die symmetrisch vorliegenden Außenschichten auf der Basis von Polyethylen basierenden Rohstoffen gestatten eine Vorbehandlung der Etikettenfolienoberfläche mit Coronaentladungen. Nach einer Coronavorbehandlung ist eine gute Bedruckbarkeit der Etikettenfolie gewährleistet.

Im Folgenden wird die Erfindung anhand von Beispielen erläutert:

### Beispiel 1:

Es wurde eine 60 µm dicke Blasfolie mit folgendem Schichtenaufbau hergestellt:
Bedruckbare Außenschicht:
   Schichtdicke 6 µm
   Zusammensetzung: 40 Gew.-% PE-LLD; 40 Gew.-% PE-LMD; 20 Gew.-% PE-MD
Kernschicht:
   Schichtdicke 48 µm
   Zusammensetzung: 65 Gew.-% PP-BC; 20 Gew.-% PP-RC; 15 Gew.% PP-H
Trägerseitige Außenschicht:
   Schichtdicke 6 µm
   Zusammensetzung: 40 Gew.-% PE-LLD; 40 Gew.-% PE-LMD; 20 Gew.-% PE-MD

Die Blasfolie wurde in einer Coronastation oberflächenbehandelt und aufgewickelt. Die Etikettenfolie wurde anschließend in einer Kaschieranlage auf einen Träger aufgebracht, bedruckt und ausgestanzt.

Das Etikettenfolien-Laminat ließ sich gut verarbeiten. Die Etikettenfolie war gut stanzbar, zeigte ein gutes Spendeverhalten und zeichnete sich durch eine sehr gute Konturenanformung aus.

Die mechanischen Eigenschaften sind in der Tabelle 1 aufgeführt.

### Vergleichsbeispiel 1:

Es wurde eine dreischichtige Blasfolie mit einem hohen Anteil an Polypropylen und Homopolymeren in der Kernschicht und einer Schichtdicke von 72 µm hergestellt, die folgenden Schichtenaufbau aufwies:
Bedruckbare Außenschicht:
   Schichtdicke 8 µm
   Zusammensetzung:40 Gew.-% PE-LLD; 40 Gew.-% PE-LMD; 20 Gew.-% PE-MD
Kernschicht:
   Schichtdicke 56 µm
   Zusammensetzung: 85 Gew.-% PP-H; 15 Gew.-% PP-RC;
Trägerseitige Außenschicht:
   Schichtdicke 8 µm
   Zusammensetzung: 40 Gew.-% PE-LLD; 40 Gew.-% PE-LMD; 20 Gew.-% PE-MD

Die Etikettenfolie wurde in der zuvor beschriebenen Weise zu einem Etikettenfolien-Laminat weiterverarbeitet. Das Etikettenlaminat ließ sich schlechter verarbeiten. Insbesondere war die Stanzbarkeit der Etikettenfolie unbefriedigend. Ferner war die Konturenanformung der Etikettenfolie unzureichend. Die mechanischen Eigenschaften ergeben sich aus der Tabelle 1.

### Vergleichsbeispiel 2:

Es wurde eine 85 µm dicke Monofolie aus Polyethylen (70 Gew.-% PE-MD; 30 Gew.-% PE-HD) hergestellt und in der zuvor beschriebenen Weise zu einem Etikettenfolien-Laminat weiterverarbeitet. Die Etikettenfolie ließ sich gut verarbeiten. Die Stanzbarkeit und das Spendeverhalten waren zufriedenstellend. Die Etikettenfolie war jedoch biegesteif und die Konturenanformung unbefriedigend. Die mechanischen Eigenschaften sind ebenfalls in Tabelle 1 aufgeführt.

Aus Tabelle 1 geht hervor, dass sich die erfindungsgemäße Etikettenfolie durch eine isotrope Biegesteifigkeit in Maschinenrichtung sowie quer zur Maschinenrichtung auszeichnet. Die Biegesteifigkeitswerte sind geringer als nach dem Stand der Technik. Die Etikettenfolie ist flexibel und zeichnet sich durch eine sehr gute Konturenanformung aus. Sie passt sich an gewölbte Flächen auch bei engen Radien an und eignet sich zur Etikettierung von flexiblen Verpackungen. Die erfindungsgemäße Etikettenfolie unterscheidet sich von den Vergleichsbeispielen ferner durch eine ausgewogene Reißdehnung in Maschinenrichtung sowie in Querrichtung, und zwar auf einem hohen Niveau. Die Etikettenfolie zeigt dadurch gute Eigenschaften beim Abgittem, d. h. beim Abziehen der gitterförmigen Stanzreste von der Trägerfolie. Die erfindungsgemäße Etikettenfolie zeichnet sich nicht nur durch die beschriebenen günstigen mechanischen Eigenschaften aus, sondern besitzt auch sehr gute optische Eigenschaften. Das Material ist transparent und besitzt ein sehr niedriges Trübungsniveau von weniger als 10 %. Im Vergleich zu Polyethylen basierten Etikettenfolien ist das Niveau der optischen Eigenschaften signifikant verbessert.

**Tabelle 1**

| **Typ** | **Dicke (µm)** | **Zugfestigkeit (N/mm²) MD / CD** | **E-Modul (N/mm²) MD / CD** | **Reißdehnung (%) MD / CD** | **Glanz (60°)** | **Trübung (%)** | **Verformungskraft⁺) (mN) MD / CD** | **Stanzbarkeit (qualitativ)** | **Spendbarkeit (qualitativ)** | **Konturen-anformung (qualitativ)** |
|---|---|---|---|---|---|---|---|---|---|---|
| Erfindung | 60 | 58 / 30 | 866 / 859 | 950 / 780 | 98 | 6 | 11,1 / 11,6 | + | + | ++ |
| VB1 | 72 | 52 / 29 | 841 / 830 | 966 / 357 | 112 | 11 | 21,1 / 20,4 | - | + | - |
| VB2 | 85 | 21 / 19 | 388 / 464 | 589 / 571 | 94 | 22 | 23,3 / 33,3 | + | + | - |

| | | | | | | | | | | |
|---|---|---|---|---|---|---|---|---|---|---|
| ⁺) Biegewinkel 30°, Probenbreite 38 mm, Messlänge 10 mm | | | | | | | | | | |

### Glossar

| | |
|---|---|
| E-Modul: | Der E-Modul wird gemäß DIN EN ISO 527 (Ausgabe 2003-07) ermittelt. |
| Glanz: | Glanz entsteht primär durch gerichtete Reflexion des Lichts. Der Glanzgrad g wird durch das Verhältnis der Intensität des reflektierten Lichtes Iᵣ zur Intensität desjenigen einer vollkommenen Standardfläche, z. B. eines hochwertigen optischen Spiegels I_{r,s}, definiert. Der Glanz wird gemäß DIN 67530 (1982-01) ermittelt. Messgerät: BYK Gardner Micro-TRI-Gloss |
| Reißdehnung: | Die Reißdehnung bezeichnet den nach der Zerstörung einer Probe im Dehnungsversuch verbleibenden Längenzuwachs bezogen auf die ursprüngliche Messlänge der Probe. Eine Reißdehnung von 100 % bedeutet, dass die Folienprobe auf das zweifache seiner ursprünglichen Länge gedehnt wurde. Die Reißdehnung wird gemäß DIN EN ISO 527 ermittelt. |
| Trübung: | Die Trübung ist ein Maß für das wolkige oder milchige Aussehen einer transparenten Folie. Die Trübung (Haze) wird gemäß ASTM D 1003 ermittelt. Verwendetes Messgerät: Hazemeter XL-211 der Firma BYK Gardner. |
| Verformungskraft: | Die Verformungskraft ist ein Maß für die Biegesteifigkeit der Folie. Gemessen wird die Verformungskraft F [N], die beim Biegen einer Folienprobe mit einer vorgewählten Mess- |
| | länge L [mm] und gleichmäßiger Winkelgeschwindigkeit bis zum eingestellten Biegewinkel α [Grad] entsteht. Die Messungen werden in Anlehnung an DIN 53121 durchgeführt. Verwendetes Messgerät: Biegesteifigkeitsprüfgerät AB Lorenzen und Wettre. |
| Zugfestigkeit: | Die Zugfestigkeit ist die Spannung, die im Zugversuch aus der maximal erreichten Zugkraft bezogen auf den ursprünglichen Querschnitt der Probe errechnet wird. Die Zugfestigkeit wird gemäß DIN EN ISO 527 (Ausgabe 2003-07) ermittelt. |
| PP-H: | Propylenhomopolymere mit einer Dichte zwischen 0,89 und 0,915 g/cm³. Bevorzugt sind Propylenhomopolymere mit einem Zug-E-Modul im Bereich zwischen 1300 und 1800 MPa sowie einem Schmelzindex MFI (DIN 53735, Prüfbedingungen 190° C / 2,16 kg) von weniger als 4 g/10 Min.. |
| PP-BC: | Propylen-Blockcopolymere. Blockcopolymere mit einem Anteil von mehr als 50 % Propylen und einem Anteil von weniger als 50 % Ethylen, Buten-1 und höheren α-Olefinen. Bevorzugt sind Propylen-Blockcopolymere mit einem Zug-E-Modul von etwa 1500 MPa und einem Schmelzindex MFI (DIN 53735, Prüfbedingungen 190° C / 2,16 kg) von weniger als 4 g/10 Min.. |
| PP-RC: | Polypropylen-Randomcopolymere. Statistisches Copolymer aus einem Anteil von mehr als 50 % Propylen und einem Anteil von weniger als 50 % Ethylen, Buten-1 oder höheren |
| | α-Olefinen. Die Polypropylen-Randompolymere weisen vorzugsweise einen Zug-E-Modul im Bereich von 600 bis 1200 MPa sowie einen Schmelzindex MFI (DIN 53735, Prüfbedingungen 190° C / 2,16 kg) von weniger als 4 g/10 Min. auf. |

## Patentansprüche

1. Verwendung einer ungereckten, transparenten Blasfolie, welche
- äußere Schichten aus Polyethylen und eine Kernschicht aus einer Polypropylen-Mischung bestehend aus 5 bis 25 Gew.-% Polypropylen-Homopolymeren (PP-H), 5 bis 35 Gew.-% Polypropylen-Random-Copolymeren (PP-RC) und 40 bis 80 Gew.-% Polypropylen-Blockcopolymeren (PP-BC) aufweist,
- mit einer im Wesentlichen gleichen Verformungskraft in Maschinenrichtung (MD) und quer zur Maschinenrichtung (CD) biegsam ist und
- eine Trübung (Haze) von weniger als 10 % aufweist,
als stanz- und bedruckbare Etikettenfolie für flexible und/oder stark gekrümmte Oberflächen.

2. Verwendung einer Blasfolie als Etikettenfolie nach Anspruch 1, wobei die Biegesteifigkeit der Folie in Maschinenrichtung (MD) und quer zur Maschinenrichtung (CD) um höchstens 10 %, vorzugsweise weniger als 5 %, von einem aus beiden Werten genommenen Mittelwert abweicht.

3. Verwendung einer Blasfolie als Etikettenfolie nach Anspruch 1 oder 2, wobei die Blasfolie einen symmetrischen dreischichtigen Aufbau aufweist und wobei das Schichtdickenverhältnis (A/B/C) der Außenschichten (A, C) zur Kernschicht (B) im Bereich 1 : 4 : 1 bis 1 : 10 : 1 liegt.

4. Verwendung einer Blasfolie als Etikettenfolie nach einem der Ansprüche 1 bis 3, wobei die Blasfolie eine Dicke von weniger als 80 µm, vorzugsweise eine Dicke von 50 bis 70 µm, aufweist.

5. Verwendung einer Blasfolie als Etikettenfolie nach einem der Ansprüche 1 bis 4, wobei die Blasfolie sowohl in Maschinenrichtung (MD) als auch quer zur Maschinenrichtung (CD) eine Reißdehnung von mindeste 600 % aufweist.

6. Verwendung einer Blasfolie als Etikettenfolie nach einem der Ansprüche 1 bis 5, wobei die Außenschichten der Blasfolie aus einer Polyethylenmischung aus PE-LLD, PE-LMD und PE-MD bestehen.

7. Verwendung einer Blasfolie als Etikettenfolie nach Anspruch 6, wobei der Anteil von Polyethylen mittlerer Dichte (PE-MD) in der Polyethylenmischung weniger als 30 Gew.-% beträgt.

8. Verwendung einer Blasfolie als Etikettenfolie nach einem der Ansprüche 1 bis 7, wobei die Oberfläche der Etikettenfolie mit Coronaentladungen oberflächenbehandelt ist.

## Claims

1. The use of an unstretched, transparent blown film, which
- comprises outer layers of polyethylene and a core layer of a polypropylene mixture consisting of 5 to 25% by weight of polypropylene homopolymers (PP-H), 5 to 35% by weight of polypropylene random copolymers (PP-RC), and 40 to 80% by weight of polypropylene block copolymers (PP-BC);
- is bendable with essentially the same deformation force in machine direction (MD) and cross-machine direction (CD); and
- has a haze of less than 10 %;
as die-cuttable and printable label film for flexible and/or strongly curved surfaces.

2. The use of a blown film as label film according to claim 1, with the bending stiffness of the film in machine direction (MD) and cross-machine direction (CD) deviating by at most 10 %, preferably by less than 5 %, from an average value calculated from the two values.

3. The use of a blown film as label film according to claim 1 or claim 2, with the blown film having a symmetrical three-layered structure, and with the layer thickness ratio (A/B/C) of the outer layers (A,C) to the core layer (B) being in the range of 1 : 4 : 1 to 1 : 10 : 1.

4. The use of a blown film as label film according to any of claims 1 to 3, with the blown film having a thickness of less than 80 µm, preferably a thickness of 50 to 70 µm.

5. The use of a blown film as label film according to any of claims 1 to 4, with the blown film having both in machine direction (MD) and cross-machine direction (CD) an elongation at break of at least 600 %.

6. The use of a blown film as label film according to any of claims 1 to 5, with the outer layers of the blown film consisting of a polyethylene mixture of PE-LLD, PE-LMD and PE-MD.

7. The use of a blown film as label film according to claim 6, with the content of medium density polyethylene (PE-MD) in the polyethylene mixture being less than 30% by weight.

8. The use of a blown film as label film according to any of claims 1 to 7, with the surface of the label film being surface-treated by means of corona discharges.

## Revendications

1. Utilisation d'une feuille obtenue par soufflage de gaine, non-étirée et transparente, qui
- comporte des couches extérieures en polyéthylène et une couche centrale en un mélange de polypropylène constitué de 5 à 25 % en poids d'homopolymères de polypropylène (PP-H), de 5 à 35 % en poids de copolymères aléatoires de polypropylène (PP-RC) et de 40 à 80 % en poids de polymères en blocs de polypropylène (PP-BC),
- est flexible de façon à ce que sa déformation dans le sens machine (MD) et perpendiculairement au sens machine (CD) nécessitent essentiellement la même force et
- présente un degré d'opacité (Haze) inférieur à 10 %,
en tant que feuille d'étiquette estampable et imprimable pour surfaces flexibles et/ou fortement courbées.

2. Utilisation d'une feuille obtenue par soufflage de gaine selon la revendication 1, la rigidité à la flexion de ladite feuille déviant tant dans le sens machine (MD) que perpendiculairement au sens machine (CD) au plus de 10 %, de préférence de moins de 5 %, d'une valeur moyenne calculée à partir desdites deux valeurs.

3. Utilisation d'une feuille obtenue par soufflage de gaine en tant que feuille d'étiquette selon les revendications 1 ou 2, ladite feuille obtenue par soufflage de gaine est composée symétriquement de trois couches, le rapport des épaisseurs de couche (A/B/C) des couches extérieures (A, C) à la couche centrale (B) étant compris entre 1 : 4 : 1 et 1 : 10 : 1.

4. Utilisation d'une feuille obtenue par soufflage de gaine en tant que feuille d'étiquette selon l'une des revendications 1 à 3, ladite feuille obtenue par soufflage de gaine présentant une épaisseur inférieure à 80 µm, de préférence une épaisseur comprise entre 50 et 70 µm.

5. Utilisation d'une feuille obtenue par soufflage de gaine en tant que feuille d'étiquette selon l'une des revendications 1 à 4, ladite feuille obtenue par soufflage de gaine présentant tant dans le sens machine (MD) que perpendiculairement au sens machine (CD) un allongement à la rupture d'au moins 800 %.

6. Utilisation d'une feuille obtenue par soufflage de gaine en tant que feuille d'étiquette selon l'une des revendications 1 à 6, les couches extérieures de ladite feuille obtenue par soufflage de gaine étant constituées d'un mélange de polyéthylène à base de PE-LLD, PE-LMD et PE-MD.

7. Utilisation d'une feuille obtenue par soufflage de gaine en tant que feuille d'étiquette selon la revendication 6, la proportion de polyéthylène à densité moyenne (PE-MD) dans ledit mélange de polyéthylène étant inférieure à 30 % en poids.

8. Utilisation d'une feuille obtenue par soufflage de gaine en tant que feuille d'étiquette selon l'une des revendications 1 à 7, la surface de ladite feuille d'étiquette ayant subi un traitement de surface de type décharges de corona.
